# EUROPÄISCHE PATENTSCHRIFT

(11) **EP 1 221 837 B1**
(45) Veröffentlichungstag und Bekanntmachung des Hinweises auf die Patenterteilung: **14.04.2004**
(21) Anmeldenummer: 00967784.0
(22) Anmeldetag: 26.09.2000
(51) Int. Cl.: A01N 25/02, A01N 57/14

(54) **NEUE FLÜSSIGFORMULIERUNGEN**
NOVEL LIQUID FORMULATIONS
NOUVELLES FORMULATIONS LIQUIDES

(30) Priorität: 08.10.1999 DE 19948589
(43) Veröffentlichungstag der Anmeldung: 17.07.2002
(73) Patentinhaber: Bayer CropScience AG, 40789 Monheim (DE)
(72) Erfinder: SIRINYAN, Kirkor, 51467 Bergisch Gladbach (DE); POSPISCHIL, Reiner, 50129 Bergheim (DE); SONNECK, Rainer, 51375 Leverkusen (DE); SCHNEIDER, Ulrike, 40764 Langenfeld (DE)
(86) Internationale Anmeldenummer: PCT/EP2000/009373
(87) Internationale Veröffentlichungsnummer: WO 2001/026461

(56) Entgegenhaltungen:
- EP-A- 0 189 588
- WO-A-99/39581
- US-A- 5 731 264
- US-A- 5 733 478
- DATABASE CHEMABS [Online] CHEMICAL ABSTRACTS SERVICE, COLUMBUS, OHIO, US; KAMEZAWA, TATSUYA: "Safe insecticidal liquids containing propylene carbonate" retrieved from STN Database accession no. 126:167921 XP002161127 & JP 09 002904 A (CHUGAI PHARMACEUTICAL CO LTD, JAPAN) 7. Januar 1997 (1997-01-07)
- DATABASE CHEMABS [Online] CHEMICAL ABSTRACTS SERVICE, COLUMBUS, OHIO, US; TRUCHLIK, STEFAN ET AL: "Pesticide emulsions containing 4-methyl-1,3-dioxolan-2-one as solvent" retrieved from STN Database accession no. 112:134535 XP002161128 & CS 261 088 B (CZECH.) 12. Januar 1989 (1989-01-12)

## Beschreibung

Die vorliegende Erfindung betrifft neue, in Wasser spontan emulgierbare Flüssigformulierungen insektizider Wirkstoffe, deren Verwendung, und Kunststofftübchen, enthaltend dieselben.

Bei der Anwendung zum Teil schwer wasserlöslicher insektizider Wirkstoffe in Form von wasserverdünnten Spritzmitteln ist es notwendig, mit Wasser emulgierbare Formulierungen für diese Wirkstoffe herzustellen. Dazu werden die Wirkstoffe zumeist in organischen Lösungsmitteln gelöst und mit Emulgatoren und gegebenenfalls weiteren Zusatzstoffen vermischt. Die Herstellung solcher Formulierungen ist z.B. in DE-OS 3 027 767 beschrieben. Als Lösungsmittel werden dabei u.a. Dimethylformamid, Dimethylacetamid, Xylol und Toluol verwendet. Die schlechte Verträglichkeit sowie die bedenkliche Toxikologie dieser bekannten Lösungsmittel lassen jedoch zu wünschen übrig. Auch die nicht immer zufriedenstellende Emulgierbarkeit und Lagerstabilität der bekannte Formulierungen stellen ungelöste Probleme dar.

JP 09 002 904A beschreibt Formulierungen von Fenitrothion und Metoxadiazone enthaltend Propylencarbonat.
WO 99/39 581 beschreibt Formulierungen von Methoenyl enthaltend Alkylencarbonate, wie z.B. Propylencarbonat.
EP 0 189 558 A2 beschreibt Formulierungen von Herbiziden, insbesondere von Tebutan, enthaltend Propylencarbonat.
US 5,731,264 beschreibt Formulierungen von Herbiziden, insbesondere Sulfonyl-Derivate und Sulfonylhamstoff-Derivate, welche polare, aprotische Lösungsmittel, wie z.B. Propylencarbonat, enthalten.
CS 261 088 B beschreibt Formulierungen von Pestiziden enthaltend Propylencarbonat.

Es wurden nun neue Flüssigformulierungen von Wirkstoffen oder Wirkstoffmischungen gefunden, die dadurch gekennzeichnet sind, daß sie
a) einen Wirkstoff bzw. eine Wirkstoffmischung,
b) Propylencarbonat und/oder Ethylencarbonat,
c) einen Emulgator oder eine Emulgatormischung,
sowie gegebenenfalls weitere Formulierungshilfsmittel enthalten.

Die erfindungsgemäßen Formulierungen eignen sich hervorragend zur Herstellung von Spritzbrühen für den Einsatz bei der Schädlingsbekämpfung in Garten, Haushalt, Gewerbe, Stallungen etc. Sie zeichnen sich durch hervorragende Lagerstabilität sowie überraschenderweise durch eine sehr gute spontane Emulgierbarkeit in Wasser aus. Sie sind außerdem einfach herzustellen. Die Lösungsmittel Propylencarbonat und Ethylencarbonat bzw. deren Mischungen untereinander sind auf Grund ihrer niedrigen Toxizität unproblematisch und gut verträglich für den Anwender.

Als Wirkstoffe kommen prinzipiell alle aus dem hygiene- und professionellen Schädlingsbekämpfungsbereich bekannten Stoffe, wie Insektizide, Herbizide und Fungizide in Frage.

Bevorzugt genannt seien die im hygiene- und professionellen Schädlingsbekänipfungsbereich eingesetzten Insektizide wie Phosphorsäureester sowie Mischungen dieser Wirkstoffe untereinander und/oder mit Synergisten genannt.

Als Phosphorsäureester seien bevorzugt genannt die Verbindungen mit den common names Phoxim, Fenitrothion, Dichlorvos, Trichlorfon und Malathion.

Als Synergist für diese Verbindungen sei bevorzugt genannt Piperonylbutoxid.

Die Wirkstoffanteile liegen in den erfindungsgemäßen Formulierungen bei 1 bis 70 Gew.-%, bevorzugt bei 5 bis 65 Gew.-%, besonders bevorzugt bei 25 bis 60 Gew.-%, ganz besonders bevorzugt bei 40 bis 60 Gew.-%.

Als erfindungsgemäßes Lösungsmittel werden Propylencarbonat, Ethylencarbonat bzw. deren Mischungen untereinander eingesetzt.

Besonders bevorzugt als Lösungsmittel ist Propylencarbonat.

Werden Ethylen- und Propylencarbonat als Mischung miteinander eingesetzt, so beträgt das Mischungsverhältnis 25-95 Gew.% zu 5 bis 75 Gew.%.

Besonders bevorzugter insektizider Wirkstoff ist Phoxim.

In den erfindungsgemäßen Formulierungen liegt der Lösungsmittelanteil bei 5 bis 80 Gew. %, bevorzugt bei 5 bis 77,5 Gew. %, besonders bevorzugt bei 25 bis 50 Gew. %, ganz besonders bevorzugt bei 25 bis 40 Gew. %.

In den erfindungsgemäßen Formulierungen wird der insektizide Wirkstoff Phoxim besonders bevorzugt eingesetzt. Die bevorzugte Phoximmenge liegt bei 25 bis 60 Gew.-%, wobei die Mengen im Bereich 40 bis 60 Gew.-% ganz besonders zu bevorzugen sind.

Die erfindungsgemäßen Formulierungen enthalten weiterhin Emulgatoren.

Als Emulgatoren seien genannt: nichtionogene Tenside, z.B. polyoxyethyliertes Rizinusöl, polyoxyethyliertes Sorbitan-monooleat, polyoxyethylierte Kohlenwasserstoffe auf Basis Styrol und α-Methylstyrol, Sorbitanmonostearat, Glycerinmonostearat, Polyoxyethylstearat, Alkylarylpolyglykolether;

Ampholytische Tenside wie Di-Na-N-lauryl-β-iminodipropionat oder Lecithin;

Anionaktive Tenside, wie Na-Laurylsulfat, Fettalkoholethersulfate, Mono/Dialkylpolyglykoletherorthophosphor-säureester-monoethanolaminsalz; kationaktive Tenside wie Cetyltrimethylammoniumchlorid.

Erfindungsgemäß bevorzugt sind nichtionogene Tenside, wobei Alkylarylpolyglykolether besonders bevorzugt sind.

Emulgatoren sind in den erfindungsgemäßen Formulierungen bevorzugt zu 2,5 bis 20 Gew.-%, besonders bevorzugt zu 2,5 bis 17,5 Gew.-%, ganz besonders bevorzugt zu 5 bis 15 Gew.-% enthalten.

Zusätzlich können die erfindungsgemäßen Formulierungen übliche Hilfsmittel wie Stabilisatoren, Antioxidantien oder Geruchsmaskierungsmittel enthalten.

Als Stabilisatoren und Antioxidantien seien genannt Sulfite oder Metabisulfite wie Kaliummetabisulfit; organische Säuren wie Citronensäure; Ascorbinsäure; Phenole, Butylhydroxytoluol, Butylhydroxyanisol, Tocopherol.

Stabilisatoren und Antioxdantien z.B. Citronensäure sind bevorzugt zu 0,1 bis 0,5 Gew.-%, besonders bevorzugt zu 0,1 bis 0,25 Gew.-% enthalten.

Geruchsmaskierungsmittel sind z.B. Mischungen organischer Fettsäureester. Sie sind bevorzugt zu 0,1 bis 2 Gew.-% in den erfindungsgemäßen Formulierungen enthalten.

Die als bevorzugt, besonders bevorzugt und ganz besonders bevorzugt gekennzeichneten Parameter, Definitionen und Bezeichnungen können untereinander, also zwischen den jeweiligen Bereichen und Vorzugsbereichen beliebig kombiniert werden.

Die erfindungsgemäßen Formulierungen zeichnen sich durch ihre hervorragende Lagerstabilität von mehreren Jahren in allen Klimazonen aus, welche u.a. durch die überraschende Abwesenheit hygroskopischer Eigenschaften und die hervorragende Reemulgierbarkeit begründet ist.

Die erfindungsgemäßen Formulierungen eignen sich hervorragend zum Abfüllen und Ausbieten in "Single dose Polypropylenkunststofftuben" der Wandstärke von 300 bis 500 µm und des Abfüllvolumens 1,0 bis 4,0 ml, da sie im Gegensatz zu den bekannten Formulierungen die Kunststoffhülle besagter Tuben unerwarteterweise nicht angreifen. Einen weiteren Vorteil stellt in diesem Zusammenhang der hohe Flammpunkt der erfindungsgemäßen Formulierungen dar.

Aufgrund ihrer biologischen Abbaubarkeit sind die erfindungsgemäßen Formulierungen zudem sehr umweltverträglich und aufgrund der sehr geringen Toxizität auch sehr anwenderfreundlich.

Sie lassen sich erstaunlicherweise spontan mit Wasser emulgieren. Die Emulsionen auf Basis der erfindungsgemäßen Emulsionskonzentrate sind frei von Sedimenten und lassen sich überraschenderweise spontan reemulgieren.

Der Begriff Emulsion ist in dieser Anmeldung entsprechend der folgenden Definition zu verstehen:

Disperse Systeme von zwei oder mehreren miteinander nicht mischbaren Flüssigkeiten. Die eine der flüssigen Phasen bildet dabei das Dispersionsmittel (auch: äußere, kontinuierliche oder zusammenhängende Phase), in dem die andere Phase (auch: innere oder disperse Phase) in Form feiner Tröpfchen verteilt ist. In Abhängigkeit von der Größe der dispergierten Teilchen und von der kinetischen bzw. thermodynamischen Stabilität spricht man von Makro- (auch: grob-dispers) und Mikro-Emulsionen (auch: kolloid-dispers). Der Teilchendurchmesser schwankt dabei zwischen 10⁻² und 10⁻⁶cm, die meisten Emulsionen zeigen jedoch eine uneinheitliche Teilchengröße und sind polydispers. Je nach Größe der dispergierten Teilchen sind E. milchig trüb (Mikroemulsion) bis klar (Mikroemulsionen).

Die in den erfindungsgemäßen Formulierungen verwendeten Wirkstoffe bzw. Wirkstoffmischungen besitzen eine breite Wirksamkeit gegen Arthropoden und Crustaceen. Die dargestellten Formulierungen sind speziell gegen Insekten (Collembolen, Fliegen, Käfer - besonders Arten deren Larven sich im Boden entwickeln, z. B. Junikäfer-, Staubläuse und Wespen), Spinnentiere (besonders Milben, z.B. Herbstmilben), Tausendfüßler und Crustaceen (z.B. Asseln) wirksam.

Die erfindungsgemäßen Formulierungen lassen sich z.B. herstellen, indem man die einzelnen Bestandteile im gewünschten Verhältnis mischt, beispielsweise in einem Rührkessel oder anderen zur Herstellung einer Mischung geeigneten Geräten.

Die nachfolgenden Beispiele sollen die Erfindung erläutern:

### Beispiel 1

| | |
|---|---|
| **Phoxim EC 50,** eine lagerungsstabile, homogene Lösung, bestehend aus Phoxim (Diethoxy-thiophosphoryloxyimino)-phenylacetonitril) | 50,00 g |
| Emulgator PS 16 (1) | 10,50 g |
| Propylencarbonat | 39,50 g |

| | |
|---|---|
| (1) Emulgator PS 16 ist ein Alkylarylpolyglykolether der Fa. Bayer AG, D-51368 Leverkusen | |

### Beispiel 2

| | |
|---|---|
| Phoxim EC 50, eine lagerungsstabile, homogene Lösung, bestehend aus Phoxim (Diethoxy-thiophosphoryloxyimino)-phenylacetonitril)VL 80(2) | 62,50 g |
| Emulgator PS 16 (1) | 10,50 g |
| Propylencarbonat | 27,00 g |

| | |
|---|---|
| (2) Phoxim VL 80 ist eine 80 %ige, technische Ware der Fa. Bayer AG, D-51368 Leverkusen | |

### Beispiel 3

| | |
|---|---|
| Phoxim EC 50, eine lagerungsstabile, homogene Lösung, bestehend aus Phoxim (Diethoxy-thiophosphoryloxyimino)-phenylacetonitril)VL 80 (2) | 62,50 g |
| Emulgator PS 16 (1) | 10,50 g |
| Propylencarbonat/Ethylencarbonat (1:1) | 27,00 g |

### Beispiel 4

| | |
|---|---|
| Phoxim EC 50, eine lagerungsstabile, homogene Lösung, bestehend aus Phoxim (Diethoxy-thiophosphoryloxyimino)-phenylacetonitril)VL 80 (2) | 62,50 g |
| Emulgator PS 16 (1) | 8,50 g |
| Emulgator 1371 A | 2,00 g |
| Propylencarbonat | 27,00 g |
| (3) Emulgator 1371A ist ein Alkylarylsulfonat (70 %ig in n-Butanol) der Fa. Bayer AG, D-51368 Leverkusen | |

### Beispiel 5

| | |
|---|---|
| Phoxim EC 50, eine lagerungsstabile, homogene Lösung, bestehend aus Phoxim (Diethoxy-thiophosphoryloxyimino)-phenylacetonitril)VL 80 (2) | 62,50 g |
| Emulgator PS 16 (1) | 10,50 g |
| Malodur Countract (4) | 1,00 g |
| Propylencarbonat/Ethylencarbonat (1:1) | 26,00 g |

| | |
|---|---|
| (4) Malodur Countract ist ein Geruchsmaskierungsmittel auf Fettsäurebasis der Fa. Haarmann und Reimer, D-37601 Holzminden | |

### Prüfung der biologischen Wirkung

### Versuchsmethoden

### 1. Laborprüfung

Für die Versuche werden Arbeiterinnen der Schwarzgrauen Wegameise *Lasius niger* verwendet, die aus einem Zuchtbehälter stammen, der im Agrarzentrum der Bayer AG in Monheim (Gebäude 6700) zu Versuchszwecken zur Verfügung steht.

Glasschalen von 9,5 cm Durchmesser und 5,5 cm Höhe werden 2,5 cm hoch mit Erde gefüllt und mit je 50 Ameisen besetzt. Die Wände der Schalen werden innen mit Teflon behandelt, um ein Entkommen der Ameisen zu verhindern.

Am nächsten Tag wird die Oberfläche mit je 7 ml des Wasser emulgierten Gießmittels (Phoxim EC 50 gemäß den Beispielen 1 bis 5) behandelt, was umgerechnet einer Applikation von einem Liter pro m² entspricht. Hierzu wird der Inhalt der jeweiligen Ameisenpipetten, PP(Polypropylen)-Tuben bestehend aus 1,4 ml Phoxim 50 EC gemäß den Beispielen 1 bis 5 in 5 Liter Wasser emulgiert.

Nach 1 und 3 Tagen wird die prozentuale Mortalitätsrate (kumulierend) bestimmt. Tote Tiere werden nicht entfernt.

Von jedem Versuch werden 3 Versuchsglieder angelegt und nach Versuchende der Mittelwert berechnet.

### 2. Freilandprüfung

Die Prüfungen wurden mit natürlich vorkommenden Populationen der Schwarzgrauen Wegameise *Lasius niger* durchgeführt. Ameisennester von vergleichbarer Größe und Aktivität der Ameisen wurden für die Prüfungen ausgewählt. Die in den Versuchen verwendeten Nester befanden sich unter Pflastersteinen, im Rasen oder unter Efeu.

Die Aktivität der Ameisen wurde vor sowie nach der Behandlung durch Auszählen der in unmittelbarer Nähe der Nesteingänge umherlaufenden Individuen bestimmt. Die für die Bestimmung der Ameisenaktivität herangezogene Fläche betrug 0.25m²-

Zur Herstellung der Spritzbrühen wurden der Inhalt der Ameisenpipetten, PP-Tuben bestehend aus 1,4 ml Phoxim 50 EC gemäß den Beispielen 1 bis 5, in 5 Liter Wasser emulgiert. Die Spritzbrühen wurde unmittelbar nach der Abmischung im Bereich der Nesteingänge und Laufwege der Ameisen ausgebracht.

Die Anzahl toter und lebender Ameisen wurde 2, 7, 14, 21 und 28 Tage nach der Anwendung des Produktes bestimmt. Temperaturmessungen wurden ebenfalls durchgeführt.

### Ergebnis der Laborprüfung

### Wirksamkeit des in einer Ameisenpipette formulierten Phoxim gegen die Schwarzgraue Wegameise Lasius niger

### (Mittel aus je 3 Versuchen)

| **Produkt** | **% Mortalität nach** | |
|---|---|---|
| | **1 d** | **3 d** |
| Ameisenpipette, PP-tube bestehend aus 1,4ml (Phoxim EC 50 gemäß den Beispielen 1 - 5 ) / 5 Liter Wasser | 83 | 100 |
| Kontrolle | 0 | 2 |

Die aus der Ameisenpipetten hergestellten Spritzlösungen haben bereits am ersten Tag mehr als 80% der Ameisen und am dritten Tag nahezu alle Tiere abgetötet.

### Ergebnisse der Freilandprüfungen

Die Behandlungen wurden Anfang Juni 1998 im Fundamentbereich eines Fachwerkhauses sowie auf einem Gehweg und einem Fahrweg in drei Nestbereichen der Schwarzgrauen Wegameise durchgeführt.

Für die Prüfungen wurden insgesamt je 10 Liter Spritzbrühe auf Basis von 2 Phoxim Ameisenpipetten, PP-tuben bestehend aus a 1,4 ml Phoxim EC 50 gemäß Beispielen 1 - 4 und Leitungswasser benötigt.

Die Ergebnisse sind in den Tabellen 1a bis 1c dargestellt

**Tabelle 1a-c**

| Wirksamkeit der Phoxim Ameisenpipette gegen die Schwarzgraue Wegameise *Lasius niger* in 3 Nestern unter Praxisbedingungen | |
|---|---|
| **1a - Nest 1** | |
| Produkt | Je 10 ltr. Sprizbrühe bestehend aus 2 x 1,4 ml Phoxim EC 50 gemäß Beispielen 1-5 und Wasser |
| Anwendung | 5 Liter entlang der Laufwege der Ameisen im Fundamentbereich (1 Liter/m²) |
| Anwendungsbereich | Fundament eines Fachwerkhauses Größe des behandelten Nestbereiches: 5m² |
| Aktivität der Ameisen vor der Behandlung* | Eingang 1 : 42 |
| | Eingang 2 : 12 |
| | Eingang 3 : 25 |
| Temperatur: 22° | Starker Befall im Haus |
| Ameisen-Aktivität 2 Tage nach der Behandlung | Eingang 1 : 0 |
| | Eingang 2 : 1 |
| | Eingang 3 : 0 |
| Temperatur: 21° | Keine Ameisen im Haus |
| Ameisen-Aktivität 7 Tage nach der Behandlung | Eingang 1 : 0 |
| | Eingang 2 : 0 |
| | Eingang 3 : 1 |
| Temperatur: 21° | Keine Ameisen im Haus |
| Ameisen-Aktivität 14 Tage nach der Behandlung | Eingang 1 : 0 |
| | Eingang 2 : 0 |
| | Eingang 3 : 0 |
| Temperatur: 18° | Keine Ameisen im Haus |
| Ameisen-Aktivität 21 Tage nach der Behandlung | Eingang 1 : 1 |
| | Eingang 2 : 2 |
| | Eingang 3 : 0 |
| Temperatur: 20° | Keine Ameisen im Haus |
| Ameisen-Aktivität 28 Tage nach der Behandlung | Eingang 1 : 1 |
| | Eingang 2 : 0 |
| | Eingang 3 : 0 |
| Temperatur: 19° | Keine Ameisen im Haus |

| **1b - Nest 2** | |
|---|---|
| Produkt | Je 10 ltr. Sprizbrühe bestehend aus 2 x 1,4 ml Phoxim EC 50 gemäß Beispielen 1- 5 und Wasser |
| Anwendung | 2.5 Liter auf einem Gehweg (1 Liter/m²) |
| Anwendungsbereich | Betonsteine im Sandbett auf einem Gehweg, der von Rasen und Efeuanpflanzungen umgeben ist. Größe der zu behandelnden Fläche: 2.5m² |
| Ameisen-Aktivität vor der Behandlung* | Eingang 1 : 34 |
| | Eingang 2 : 18 |
| Ameisen-Aktivität 2 Tage nach der Behandlung | Eingang 1 : 0 |
| | Eingang 2 : 0 |
| Ameisen-Aktivität 7 Tage nach der Behandlung | Eingang 1 : 0 |
| | Eingang 2 : 0 |
| Ameisen-Aktivität 14 Tage nach der Behandlung | Eingang 1 : 0 |
| | Eingang 2 : 2 |
| Ameisen-Aktivität 21 Tage nach der Behandlung | Eingang 1 : 1 |
| | Eingang 2 : 0 |
| Ameisen-Aktivität 28 Tage nach der Behandlung | Eingang 1 : 1 |
| | Eingang 2 : 0 |

| **1c - Nest 3** | |
|---|---|
| Produkt | Je 10 ltr. Sprizbrühe bestehend aus 2 x 1,4 ml Phoxim EC 50 gemäß Beispielen 1-4 und Wasser |
| Anwendung | 2.5 litre entlang des Gehweges (1 Liter/m²) |
| Anwendungsbereich | Betonsteine im Sandbett auf einem Fahrweg, ca. 50cm von Rasen entfernt. Größe des zu behandelnden Bereiches: 5m² |
| Ameisen-Aktivität vor der Behandlung* | Eingang 1 : 45 |
| | Eingang 2 : 38 |
| Ameisen-Aktivität 2 Tage nach der Behandlung | Eingang 1 : 0 |
| | Eingang 2 : 0 |
| Ameisen-Aktivität 7 Tage nach der Behandlung | Eingang 1 : 0 |
| | Eingang 2 : 0 |
| Ameisen-Aktivität 14 Tage nach der Behandlung | Eingang 1 : 0 |
| | Eingang 2 : 0 |
| Ameisen-Aktivität 21 Tage nach der Behandlung | Eingang 1 : 0 |
| | Eingang 2 : 0 |
| Ameisen-Aktivität 28 Tage nach der Behandlung | Eingang 1 : 0 |
| | Eingang 2 : 0 |

| | |
|---|---|
| *Anzahl der Ameisen, die sich im Bereich des Nesteingangs aufhalten (Größe der begutachteten Fläche: 0.25m²) | |

Ein starker Befall durch die Schwarzgraue Wegameise *Lasius niger* wurde in der Küche eines Fachwerkhauses gefunden. Die Ameisen gelangten von einem Nest im Fundamentbereich des Hauses in das Innere (Tabelle 1a). Nach der Ausbringung des Phoxim Ameisenmittels wurden über die nachfolgenden Wochen keine Ameisen mehr im Haus gefunden. Entlang der Außenmauer wurden nur 2 Ameisen in den folgenden vier Wochen registriert.

In der Nähe des Nestes, das sich auf dem Gehweg befand, wurden in dem Beobachtungszeitraum wenige Ameisen gefunden, die aber aus einem benachbarten, unbehandelten Nest zu kommen schienen, das sich unter der Efeu Anpflanzung befand (Tabelle 1b).

Auf dem Fahrweg wurden in den vier Wochen nach der Behandlung keine Ameisen mehr gefunden (Tabelle 1c).

Zwei Nester, die sich ca. 20 Meter von den behandelten Nestern entfernt an einem Pferdestall befanden, zeigten über den gesamten Versuchszeitraum eine starke Aktivität.

## Patentansprüche

1. Zusammensetzung, enthaltend
a) einen oder mehrere Wirkstoffe, ausgewählt aus der Gruppe Phoxim, Fenitrothion, Dichlorvos, Trichlorofon und Malathion,
b) ein oder mehrere Lösungsmittel, ausgewählt aus der Gruppe Propylencarbonat und Ethylencarbonat,
c) ein oder mehrere Tenside, ausgewählt aus der Gruppe der nichtionischen Tenside, ampholytischen Tenside und anionaktiven Tenside,
sowie gegebenenfalls weitere Hilfsmittel.

2. Zusammensetzung nach Anspruch 1, enthaltend
a) den Wirkstoff Phoxim.

3. Zusammensetzung nach Anspruch 1 oder 2, enthaltend
b) das Lösungsmittel Propylencarbonat.

4. Zusammensetzung nach Anspruch 1 oder 2, enthaltend
c) Alkylarylpolyglykolether als Tensid.

5. Zusammensetzung gemäß einem der Ansprüche 1 bis 4, **dadurch gekennzeichnet, daß** sie wasser-emulgierbar sind.

6. Verwendung von Zusammensetzungen gemäß einem der Ansprüche 1 bis 4 zur Herstellung von wäßrigen Spritzemulsionen zur Bekämpfung von Schädlingen.

7. Kunststofftübchen, **dadurch gekennzeichnet, daß** sie mit einer Zusammensetzung gemäß einem der Ansprüche 1 bis 4 gefüllt sind.

8. Gießfähige, wäßrige Emulsion zur Bekämpfung von Schädlingen, **dadurch gekennzeichnet, daß** sie die Zusammensetzung gemäß einem der Ansprüche 1 bis 4 enthält.

9. Verwendung von Zusammensetzung gemäß Ansprüchen 1 bis 4 zur Bekämpfung von Schädlingen.

## Claims

1. Composition comprising
a) one or more active ingredients chosen from the group consisting of phoxim, fenitrothion, dichlorvos, trichlorfon and malathion,
b) one or more solvents chosen from the group consisting of propylene carbonate and ethylene carbonate,
c) one or more surfactants chosen from the group consisting of nonionic surfactants, ampholytic surfactants and anion-active surfactants,
and optionally further auxiliaries.

2. Composition according to Claim 1, comprising
a) the active ingredient phoxim.

3. Composition according to Claim 1 or 2, comprising
b) the solvent propylene carbonate.

4. Composition according to Claim 1 or 2, comprising
c) alkylaryl polyglycol ether as surfactant.

5. Composition according to any of Claims 1 to 4, **characterized in that** it is water-emulsifiable.

6. Use of compositions according to any of Claims 1 to 4 for the preparation of aqueous spray emulsions for controlling pests.

7. Plastic tubelets, **characterized in that** they are filled with a composition according to any of Claims 1 to 4.

8. Pourable, aqueous emulsion for controlling pests, **characterized in that** it comprises the composition according to any of Claims 1 to 4.

9. Use of compositions according to Claims 1 to 4 for controlling pests.

## Revendications

1. Composition contenant
a) une ou plusieurs substances actives choisies dans le groupe phoxime, fénitrothion, dichlorvos, trichlorfon et malathion,
b) un ou plusieurs solvants, choisis dans le groupe carbonate de propylène et carbonate d'éthylène,
c) un ou plusieurs agents tensioactifs, choisis dans le groupe des agents tensioactifs non ioniques, des agents tensioactifs ampholytiques et des agents tensioactifs anioniques,
ainsi que, le cas échéant, d'autres substances auxiliaires.

2. Composition suivant la revendication 1, contenant
a) la substance active phoxime.

3. Composition suivant la revendication 1 ou 2, contenant
b) le solvant carbonate de propylène.

4. Composition suivant la revendication 1 ou 2, contenant
c) un éther d'alkylarylpolyglycol comme agent tensioactif.

5. Compositions suivant l'une des revendications 1 à 4, **caractérisées en ce qu'**elles sont émulsionnables dans l'eau.

6. Utilisation de compositions suivant l'une des revendications 1 à 4 pour la préparation d'émulsions aqueuses pulvérisables destinées à combattre des parasites.

7. Minitubes en matière plastique, **caractérisés en ce qu'**ils sont chargés d'une composition suivant l'une des revendications 1 à 4.

8. Emulsion aqueuse pouvant être versée, destinée à la lutte contre des parasites, **caractérisée en ce qu'**elle contient la composition suivant l'une des revendications 1 à 4.

9. Utilisation d'une composition suivant les revendications 1 à 4 pour la lutte contre des parasites.
